# EUROPEAN PATENT APPLICATION

(11) **EP 3 738 933 A1**
(43) Date of publication of application: **18.11.2020**
(21) Application number: 19205342.9
(22) Date of filing: 25.10.2019
(51) Int. Cl.: C02F 1/461, A47J 31/44, C02F 103/02, C25B 1/04

(54) **HYDROGEN WATER GENERATOR**

(30) Priority: 14.05.2019 KR 20190056336; 10.07.2019 KR 20190083414
(71) Applicant: LG Electronics Inc., SEOUL, 07336 (KR)
(72) Inventor: YOO, Hyun Sun, 07365 Seoul (KR); KIM, Joo Gyeom, 06213 Seoul (KR); CHUN, Jae Hung, 07980 Seoul (KR)
(74) Representative: Vossius & Partner Patentanwälte Rechtsanwälte mbB

(57) **Abstract**

Hydrogen water generator (1000, 2000, 3000, 600) includes a body (100, 200), a water tank (101, 103) for receiving and storing water, an electrode module (105) coupled to the water tank (101, 103) for generating hydrogen (H2) water in the water tank (101, 103), a water supply inlet (103) disposed at the body (100, 200), the water supply inlet (103) including an open surface disposed at a surface of the body (100, 200) so as to open to an outside environment, and a cover plate (210, 240, 250) for opening and closing the open surface of the water supply inlet (103). The cover plate (210, 240, 250) is movable along a transverse direction parallel to the open surface of the water supply inlet (103) to open and close the open surface of the water supply inlet (103).

## Description

### Cross-Reference to Related Applications

This application claims the benefit of priority to Korean Patent Application Nos. 10-2019-0056336 filed on May 14, 2019 and 10-2019-0083414 filed on July 10, 2019 with the Korean Intellectual Property Office, the entire contents of which are incorporated herein by reference.

### Field of the Disclosure

The present disclosure relates to a hydrogen water generator, and to a hydrogen water generator that generates hydrogen water and dispenses hydrogen water.

### Background

Generally, hydrogen water refers to water in which hydrogen (H₂) are mixed at a predetermined level or more. Hydrogen water is effective in preventing dermatitis such as atopic dermatitis, skin whitening, aging through oxidants, and may increase immunity when drunk.

In particular, when oxygen radicals enter the human body, the free radicals may cause various diseases such as cancer. In this regard, drinking hydrogen water may have the effect of removing such oxygen radicals, which has attracted much attention.

The solubility of hydrogen in water is about 0.0002, which is one of the relatively poor soluble gases. In addition, even when hydrogen water is prepared by dissolving hydrogen in water, hydrogen may be easily escape from the hydrogen water. Therefore, it is necessary to minimize the escape of hydrogen in the hydrogen water to the outside environment starting from the generation of the hydrogen water until the hydrogen water is consumed by the user. Maintaining a high concentration of hydrogen in the hydrogen water may be important for improving the use effect of the hydrogen water.

On the other hand, utilizing hydrogen water has become very diversified according to the various effects that may be provided by the hydrogen water. For example, users may not only drink hydrogen water, but may also wash or shower with hydrogen water. In addition, the hydrogen water is supplied to humidifiers for misting, and even a use is being developed where hydrogen water is used in water beds. As such, in order to generate hydrogen water and provide the user with hydrogen water for use in various forms, the hydrogen water generator may need to be variously designed and modified as necessary. To this end, it is desirable to freely design and arrange the main components of hydrogen water generators.

Therefore, it is necessary to minimize the structural constraints on the main components in the design of hydrogen water generator. Providing hydrogen water through various structures may be an important task for adequately responding to diversified market conditions and user needs.

An example of a hydrogen water generator may be found in Korean Patent No. 10-1810149. The hydrogen water generator generates, stores, and discharges hydrogen water. The hydrogen water generator produces hydrogen by electrolyzing water using an electrolytic cell and supplies the hydrogen to a water container where the hydrogen dissolves in water. The hydrogen supplied to the water container is dispensed through a discharge cork.

The water container in which the hydrogen water is stored has an opening at the upper surface and after replenishing the water container with regular water through the opening of the water container, a lid is coupled to the opening of the water container to make the water container airtight. However, in order to replenish the water container with regular water, the lid that is coupled to the opening of the water container must be opened and the opening of the water container is exposed outside of the hydrogen water generator at all times. Therefore, when designing the hydrogen water generator, there is no choice but to restrict the placement of the water container.

In addition, since the lid that closes on the opening of the water container is only supported by the circumferential length of the upper surface of the water container, the contact is limited by the circumferential length. Therefore, the coupling of the lid to the hydrogen water generator is not relatively stable.

In addition, since the lid is simply assembled in a completely detachable manner to the opening of the water container, the direction of the discharge pressure applied toward the lid in the water container and the opening direction of the lid are relatively parallel to each other. Therefore, the airtightness of the water container through the lid is not relatively high.

Another example of a hydrogen water generator may be found in Korean Patent Registration No. 10-1624322. The hydrogen water generator opens and closes an outlet tube with a rotation cover. The hydrogen water generator includes a base for generating hydrogen water from regular water to which a water container is coupled, and a housing to which the water container is assembled includes an upper outlet pipe functioning as a discharge passage of the hydrogen water. In addition, a rotation cover is coupled to a hinge at one side of an upper portion of the housing for opening and closing the upper outlet pipe.

In particular, the upper outlet pipe for the discharging hydrogen water is formed on the upper side of the water container, and the upper outlet pipe is opened and closed by the rotation cover using a hinge method. Also, the rotation cover uses a separate lock to lock the rotation cover in order to maintain airtightness. However, the structure above is a kind of a tumbler type in which the generation, storage, and discharge of hydrogen water are all performed at the water container. Therefore, the structure of the hydrogen water generator described above may not be variously modified.

In addition, the rotation cover is supported by the hinge on one side and the lock on the other side. Therefore, in order to stabilize the coupling of the rotational cover to the hydrogen water generator, there is a constraint that a separate lock is required.

In addition, the rotation cover rotates around the hinge on one side to open the upper outlet pipe. Therefore, the direction of the discharge pressure applied toward the rotation cover in the water container and the opening direction of the rotation cover are partially parallel to each other. Therefore, the airtightness of the water container through the rotation cover 30 is not relatively high.

As described above, the described hydrogen water generators have problems in functionality to minimize the loss of hydrogen and have various structural constraints.

### Summary

The invention is specified by the independent claim. Preferred embodiments are defined by the dependent claims.

One aspect is to minimize structural constraints on the arrangement of the main components of the hydrogen water generator while providing a high hydrogen concentration in hydrogen water, even when the hydrogen water generator is designed in various structures according to use.

Another aspect is to provide a stable coupling state in the water supply inlet where sealing is individually formed and variably combined with the rest of the hydrogen water generator.

Another aspect is to offset the discharge pressure applied toward the water supply inlet to improve the airtightness of the hydrogen water generator during the generation and storage of hydrogen water.

The disclosure describes a hydrogen water generator including a body, a water tank for receiving and storing water, an electrode module coupled to the water tank for generating hydrogen water in the water tank, a water supply inlet disposed at the body, the water supply inlet including an open surface disposed at a surface of the body so as to open to an outside environment, and a cover plate for opening and closing the open surface of the water supply inlet. The cover plate is movable along a transverse direction parallel to the open surface of the water supply inlet to open and close the open surface of the water supply inlet.

The disclosure describes a hydrogen water generator including a body including an upper surface having a planar shape in which a length in one direction is longer than a length in another direction, a water tank for receiving and storing water, an electrode module coupled to the water tank for generating hydrogen water in the water tank, a water supply inlet disposed at the body, the water supply inlet including an open surface disposed at the upper surface of the body so as to open to an outside environment, and a cover plate for opening and closing the open surface of the water supply inlet. The cover plate is movable along the upper surface of the body having the planar shape in the direction having the longer length to open and close the open surface of the water supply inlet. The hydrogen water generator also includes a sensor for sensing a concentration of hydrogen in the hydrogen water stored in the water tank, and a controller configured to activate the electrode module to generate hydrogen when the sensor senses that the concentration of hydrogen in the hydrogen water is less than a predetermined amount.

### Brief Description of the Drawings

FIG. 1 is a perspective view showing a hydrogen water generator according to a first embodiment of the present invention.
FIG. 2 is an exploded perspective view showing a configuration of the hydrogen water generator according to the first embodiment of the present invention.
FIG. 3 is a cross-sectional view showing a configuration of the hydrogen water generator according to the first embodiment of the present invention.
FIGs. 4 and 5 are side views showing an example of a state of using the hydrogen water generator according to the first embodiment of the present invention.
FIGs. 6 and 7 are side views showing another example of a state of using the hydrogen water generator according to the first embodiment of the present invention.
FIGs. 8 and 9 are views showing in detail with respect to a sliding of a cover plate in the hydrogen water generator according to another embodiment of the present invention.
FIGs. 10 and 11 are views showing in detail a state in which the cover plate couples with a body of the hydrogen water generator according to an embodiment of the present invention.
FIG. 12 is a side view showing an example of a state of using a hydrogen water generator according to a second embodiment of the present invention.
FIG. 13 is a side view showing an example of a state of using a hydrogen water generator according to a third embodiment of the present invention.

### Detailed Description of the Preferred Embodiments

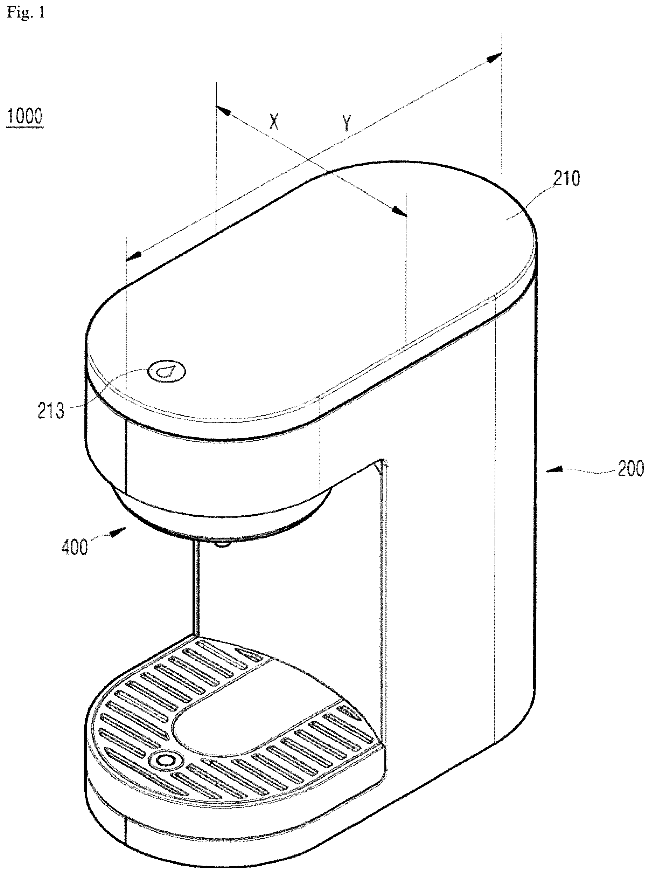

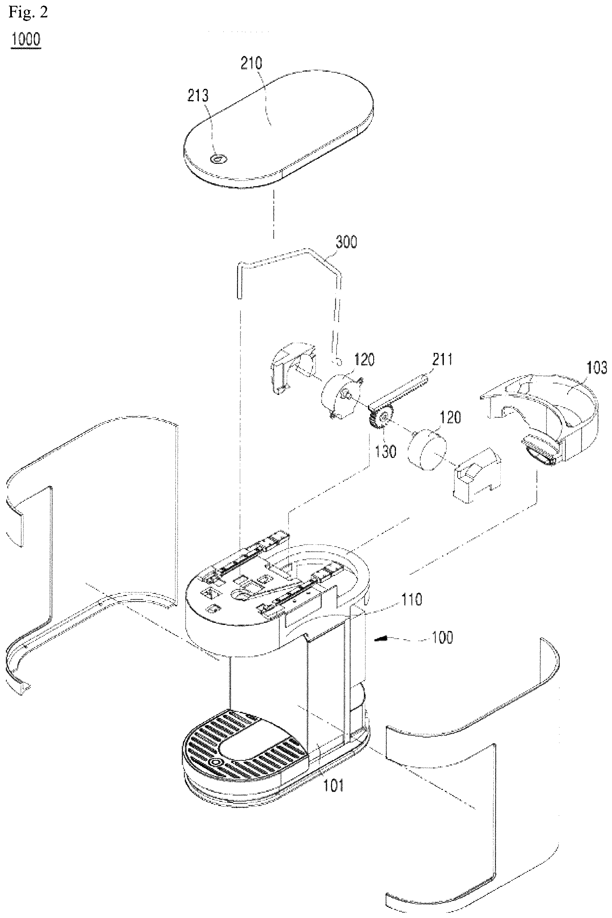

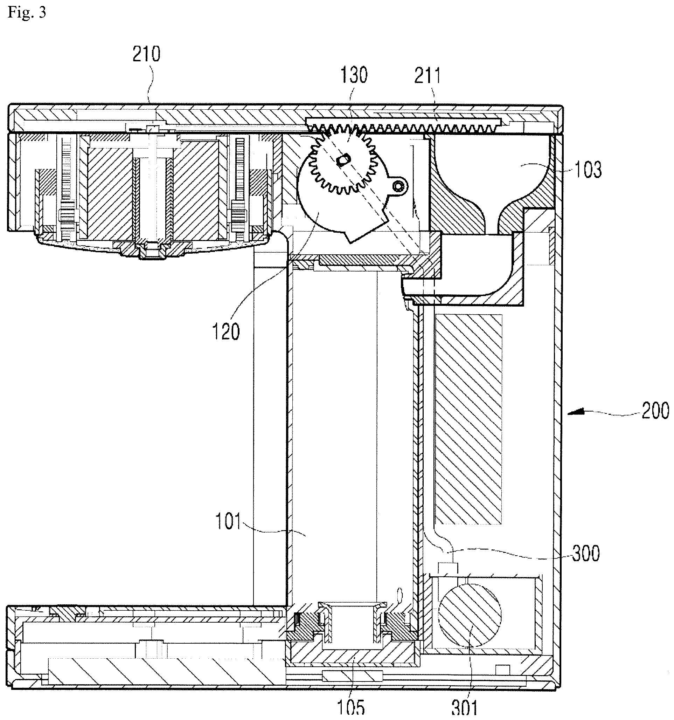

FIG. 1 is a perspective view showing a hydrogen water generator according to a first embodiment of the present invention. Fig. 2 is an exploded perspective view showing a configuration of the hydrogen water generator according to the first embodiment of the present invention. FIG. 3 is a cross-sectional view showing a configuration of the hydrogen water generator according to the first embodiment of the present invention.

Referring to FIGs. 1 to 3, the hydrogen water generator 1000 according to the first embodiment of the present invention includes a main body 100, a body 200, a transfer pipe 300, and a water discharger 400. Here, the main body 100 includes a water tank 101 and a water supply inlet 103, and the body 200 includes a cover plate 210.

The main body 100 may be a part for preparing and storing hydrogen water, and may be a part for performing a main function in the hydrogen water generator 1000 according to the present embodiment. That is, the main body 100 includes components related to the function of receiving regular water and generating hydrogen water from regular water, and storing the hydrogen water for use by the user. Therefore, the main function of the hydrogen water generator 1000 may be implemented in the main body 100.

The body 200 may be a part for covering the main body 100 to close the main body 100 from the outside environment, and may be a part forming an outer appearance of the hydrogen water generator 1000 according to the present embodiment. That is, the main body 100 and the transfer pipe 300 and the water discharger 400, to be described later, are all configured to function in a state covered by the body 200.

In this case, the state in which the body 200 covers the main body 100 to be closed to the outside environment does not mean only a state in which all parts of the main body 100 are disposed inside the body 200 to be closed to the outside environment. For instance, in this state, a portion of the main body 100 may be exposed to the outside of the body 200. For example, a part of the main body 100 that is exposed outside of the body 200 may form the exterior of the hydrogen water generator 1000 together with the body 200 and may constitute a state of being closed to the outside environment.

The transfer pipe 300 may be a part installed in the body 200 in which the hydrogen water stored in the main body 100 is transferred through the main body 100. That is, the hydrogen water generated and stored in the main body 100 may be transferred to the water discharger 400 through the transfer pipe 300. For example, one end of the transfer pipe 300 may be coupled to the water tank 101 of the main body 100 and the other end may be coupled to the water discharger 400. Accordingly, the hydrogen water generated in the main body 100 and stored in the water tank 101 may be transferred to the water discharger 400 through the transfer pipe 300.

Here, the transfer pipe 300 may be coupled to a pump 301 which pumps the hydrogen water from the water tank 101. If necessary, the transfer pipe 300 may be installed in a form of branching and may coupled to a separate valve or the like that selectively adjust the transfer direction of the hydrogen water.

The water discharger 400 may be coupled to the transfer pipe 300 to discharge the hydrogen water outside of the body 200. For example, the water discharger 400 may be coupled to the end of the transfer pipe 300 which constitutes a flow path of the hydrogen water and may be coupled to the main body 100 such that a portion of the flow path of the hydrogen water in the discharge direction is exposed outside of the body 200. That is, the hydrogen water generated and stored in the main body is transferred to the water discharger 400 through the transfer pipe 300. Then, the hydrogen water transferred to the water discharger 400 is discharged through a portion of the water discharger 400 that is exposed to the outside of the body 200.

The water tank 101 may be a portion installed in the main body 100 to store the regular water or generated hydrogen water. The water tank 101 may store the regular water supplied into the hydrogen water generator 1000 or may store the hydrogen water generated from the supplied regular water.

The water supply inlet 103 may be coupled to the water tank 101 and may have a portion formed so that at least a portion of the upper surface of the body 200 is opened to the outside environment. Accordingly, when regular water is supplied through the open portion of the upper surface of the body 200, the regular water is received by the water supply inlet 103 and is transferred to the water tank 101 coupled to the water supply inlet 103. The water supply inlet 103 may be directly coupled to the water tank 101. Alternatively, the water supply inlet 103 may be indirectly coupled through a connection pipe interposed between the water supply inlet 103 and the water tank 101.

The main body 100 may further include parts other than the water tank 101 and the water supply inlet 103 as described above. The main body 100 may further include an electrode module 105 coupled to the water tank 101 to supply hydrogen to the regular water stored in the water tank 101 to generate the hydrogen water. The electrode module 105 may electrolyze the stored regular water in the water tank 101 to generate oxygen at the positive electrode plate, and hydrogen at the negative electrode plate of the electrode module 105.

The electrode module 105 may be called in different terms such as a hydrogen water generating module or a generating module. However, these terms are merely differences in expression, and the functions and effects may be the same or substantially the same.

Hydrogen generated at the negative electrode plate of the electrode module 105 may dissolve in the regular water stored in the water tank 101 coupled with the electrode module 105, and thus, hydrogen water is generated from the regular water stored in the water tank 101.

It should be noted that the main body 100 is not limited to only the exemplary configuration described above, and may further include various other configurations for generating hydrogen water.

The cover plate 210 may be a portion that may cover a portion or all of the upper surface of the main body 100 to open and close the open surface of the water supply inlet 103. The cover plate 210 may be a portion corresponding to the upper surface of the body 200 forming the upper outer appearance of the hydrogen water generator 1000. The cover plate 210 itself may form an upper surface of the hydrogen water generator 1000. The cover plate 210 may open and close the open surface of the water supply inlet 103 formed to be open toward the upper surface of the body 200.

The user may move the cover plate 210 to expose the open surface of the water supply inlet 103 and then supply the regular water into the water supply inlet 103. In this way, the regular water supplied to the water supply inlet 103 may be transferred to the water tank 101 which is coupled to the water supply inlet 103.

After the supply of the regular water is completed, the user may move the cover plate 210 to its original position (close position) to close the water supply inlet 103 with the cover plate 210. The water supply inlet 103 and the main body 100 may be hermetically sealed from the outside environment by the body 200 including the cover plate 210. In this case, the hydrogen water generated in the water tank 101 may be sealed by the cover plate 210 and hydrogen escaping from the hydrogen water may be prevented. Also, hydrogen escaping from the hydrogen water may be prevented from escaping to the outside of the hydrogen water generator 1000.

Accordingly, the hydrogen water generator 1000 described above may not need to consider the arrangement and coupling relationship for sealing hydrogen within the hydrogen water generator 1000. Thus, the design constraints of the hydrogen water generator, and for example, the design of the installation position of the water tank 101 in the main body 100 may be minimized and hydrogen water may be stored without hydrogen loss to the outside environment. Accordingly, a hydrogen water generator 1000 may be designed in various structures according to the intended use.

The hydrogen water generator 1000 according to the present embodiment may have a cover plate 210 that is elongated in the opening direction (see FIG. 1). The cover plate 210 that opens and closes the open surface of the water supply inlet 103 may have a relatively long contact length and may be movably coupled with the remaining portion of the hydrogen water generator 1000. The cover plate 210 which may be a part of the body 200 closes the open surface of the water supply inlet 103 and covers the upper surface of the main body 100. In addition, the cover plate 210 is not coupled to the water supply inlet 103, but is coupled to the rest of the body 200 that covers the main body 100 providing for relatively long contact.

As such, when the cover plate 210 covers the upper surface of the main body 100, the cover plate 210 along with the body 200 covers the main body 100. Accordingly, the cover plate 210 and the body 200 having a relatively long coupling length may maintain a more secure and stable coupling state.

In the hydrogen water generator 1000 according to the present embodiment, the cover plate 210 may slide along in a horizontal direction parallel to the open surface of the water supply inlet 103, and may open and close the open surface of the water supply inlet 103. The water supply inlet 103 may have a shape in which at least a portion of the upper surface is open, and the open surface of the water supply inlet 103 may be formed on the horizontal plane.

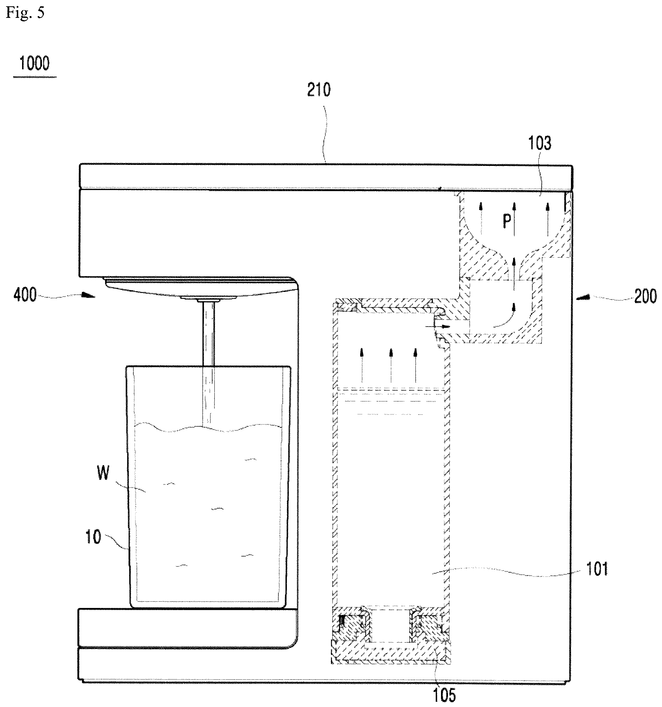

Accordingly, the cover plate 210 may be configured to move along the transverse direction on the transverse plane on which the open surface of the water supply inlet 103 is formed. That is, the cover plate 210 may slide in the transverse direction with limited or no displacement in the longitudinal direction. On the other hand, a certain amount of hydrogen escaping from the hydrogen water in the water tank 101 may raise to the water supply inlet 103 and may try to escape to the outside environment through the water supply inlet 103. In this situation, a discharge pressure (P in FIG. 5) may be applied to the cover plate 210 covering the open surface of the water supply inlet 103 along the longitudinal direction from the upper surface of the water supply inlet 103.

Accordingly, in order to improve the airtightness of the hydrogen water generator 1000 during escape of the hydrogen through the water supply inlet 103, the longitudinal discharge pressure (P in FIG. 5) applied to the cover plate 210 from the inside of the hydrogen water generator 1000 may need to resisted or offset.

In the hydrogen water generator 1000 according to the present embodiment, the discharge pressure (P in FIG. 5) applied from the inside toward the outside of the hydrogen water generator 1000 through the water supply inlet 103 and the opening/closing direction of the cover plate 210 cross each other, and the discharge pressure thereof (P in FIG. 5) may be offset. The cover plate 210 may be coupled to the body 200 so as to slide along the transverse direction parallel to the open surface of the water supply inlet 103, and the displacement in the longitudinal direction may be limited or none. Further, the cover plate 210 and the body 200 may have a relatively long coupling length. Through this, the discharge pressure (P in FIG. 5) asserted by the hydrogen from the water supply inlet 103 towards the cover plate 210 may be offset by the coupling force of the cover plate 210 and the body 200 with limited or no displacement in the longitudinal direction. Therefore, the airtightness of the hydrogen water generator 1000 may be improved when the hydrogen water is generated and stored.

In the hydrogen water generator 1000 according to the present embodiment, the upper surface of the body 200 may be formed to have a planar shape in which the length in one axis direction is longer than the length in the other axis direction that is perpendicular thereto. The cover plate 210 may slide along the relatively long axial direction of the upper surface of the body 200 and may open and close the open surface of the water supply inlet 103.

As shown in FIG. 1, the upper surface of the body 200 may be formed in a rectangular or elliptical shape or a modified shape thereof having different lengths in the width direction (X direction) and the length direction (Y direction) thereof. One axis of a relatively long direction may be called long axis (Y) and the other axis of a relatively short direction may be called short axis (X).

If the cover plate 210 slides along the long axis (Y) direction, the cover plate 210 moves along a relatively long length direction. Therefore, the sliding length of the cover plate 210 may be longer when compared with the sliding length in the short axis (X) direction. Thus, according to the present embodiment, the cover plate 210 slides along the long axis (Y) on the upper surface of the body 200. Accordingly, the opening and closing range of the cover plate 210 through sliding may be wide.

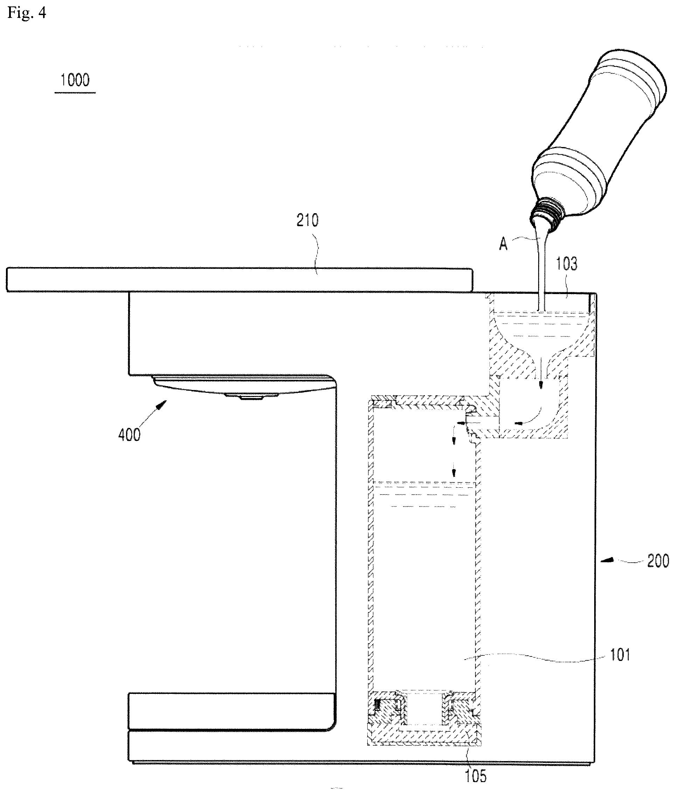

FIGs. 4 and 5 are side views showing an example of a state of using the hydrogen water generator according to the first embodiment of the present invention.

An example of using the hydrogen water generator 1000 according to the present embodiment will be described with reference to FIGs. 4 and 5. As shown in FIG. 4, the user may open the water supply inlet 103 by moving the cover plate 210 and pouring regular water A into the open surface of the water supply inlet 103. In this case, the movement of the cover plate 210 to open the water supply inlet 103 may be performed by the user manually. For example, the user may press against the cover plate 210 and move the cover plate 210 horizontally along the long axis (Y) direction. The regular water A poured into the water supply inlet 103 is supplied and stored in the water tank 101 coupled to the water supply inlet 103.

As shown in FIG. 5, after the pouring of the regular water A is completed, the user may move the cover plate 210 to its original position to close the water supply inlet 103 with the cover plate 210. The movement of the cover plate 210 to its original position to close the water supply inlet 103 may also be performed by the user manually. Once closed, the water supply inlet 103 and the body 200 may be sealed from the outside environment. The regular water in the water tank 101 may be generated into hydrogen water W by the electrode module 105. Because of low solubility of hydrogen, some hydrogen may escape from the hydrogen water W to rise out of the water tank 101 and into the water supply inlet 103. The hydrogen may gather at the upper surface of the water supply inlet 103 to apply discharge pressure P towards the cover plate 210. However, the discharge pressure P asserted by the hydrogen from the water supply inlet 103 towards the cover plate 210 may be offset by the coupling force of the cover plate 210 and the body 200. Therefore, the hydrogen escaping from the hydrogen water W stored in the water tank 101 may be prevented from discharging to the outside of the hydrogen water generator 1000.

Once the cover plate 210 is moved to its original position to close the water supply inlet 103, the user may press or touch the operation button 213 (see FIG. 1) to input a signal for generating or discharging hydrogen water W. While one operation button 103 is shown, several operation buttons 103 may be provided, one for each operation. For example, one operation button may be provided for generating hydrogen water W and another operation button may be provided for discharging the hydrogen water W through the water discharger 400.

Hydrogen may be generated by electrolyzing water in the electrode module 105 according to the signal for producing hydrogen water W. The generated hydrogen may dissolve in the regular water A stored in the water tank 101 to generate hydrogen water. This process may be performed within a set time from the input of the signal for generating hydrogen water W. Then, the hydrogen water generator 1000 may be placed in the standby state while maintaining the generated hydrogen water W.

Thereafter, the user may place a water container 10 under the water discharger 400 in order to obtain the hydrogen water W. A signal for discharging the hydrogen water W may be inputted. The water discharger 400 discharges the hydrogen water W to fill the water container 10. In this case, while the signal for discharging is received, the water discharger 400 may continue to discharge hydrogen water until the signal is stopped. For example, the user may press the operation button 213 and as long as the operation button remains pressed, the water discharger 400 will discharge hydrogen water W. Alternatively, the amount of hydrogen water W to be filled in the water container 10 may be through one shot discharge of hydrogen water W, which may be set in the hydrogen water generator 1000 by the user. Alternatively, the amount of hydrogen water W to be discharged may be preset in advance in the hydrogen water generator 1000. Many possibilities may be contemplated.

When the discharge of the hydrogen water W is completed, the user may withdraw the water container 10 from the hydrogen water generator 1000 to use for its intended purpose.

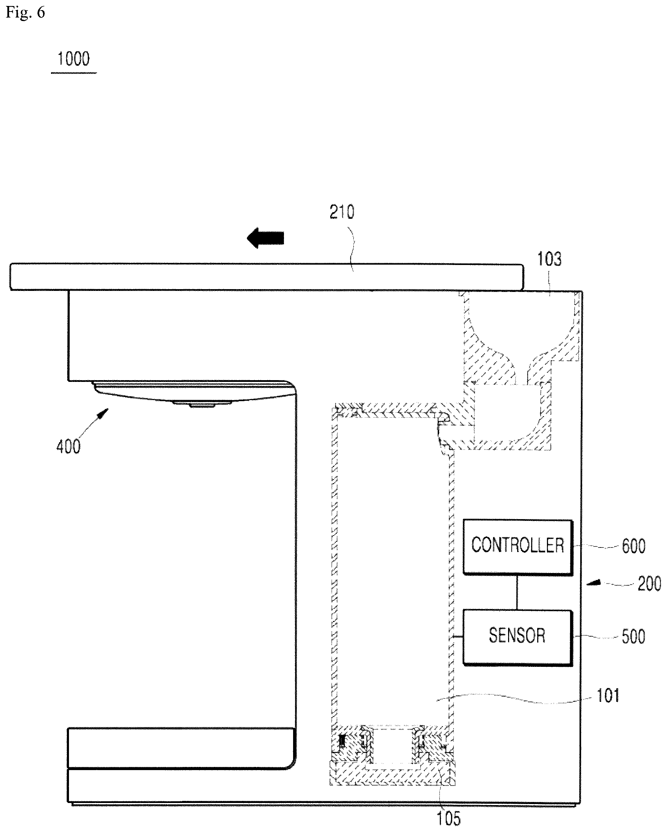

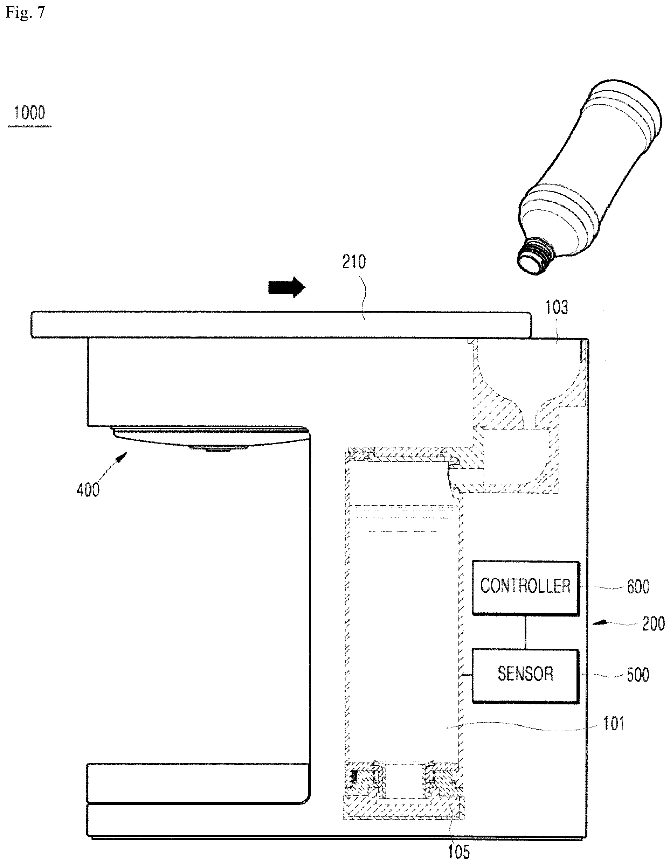

FIGs. 6 and 7 are side views showing another example of a state of using a hydrogen water generator according to the first embodiment of the present invention.

Referring to FIGs. 6 and 7, the hydrogen water generator 1000 according to the first embodiment of the present invention may include a controller 600 and a sensor 500. The controller 600 may provide for the overall operation of the hydrogen water generator 600. The controller 600 may receive input from an input unit, such as the operation button 213, among others, and send information to an output unit, such as a display for display, or a speaker to generate a sound that conveys information, etc. For example, the controller 600 may receive a signal for opening/closing the water supply inlet 103, may receive a signal for activating the electrode module 105, may receive a signal for discharging hydrogen water, among others. The controller 600 may send information to the display to display status information of the hydrogen water generator, display that the water level in the water tank 101 is low, among others.

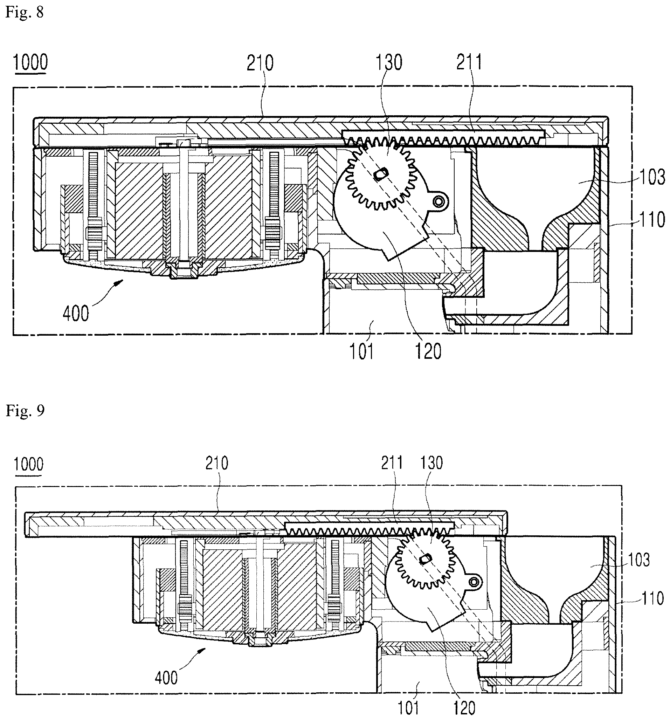

The controller 600 may control the opening/closing motor 120 (see FIG. 8) to open/close the water supply inlet 103. The controller 600 may control the electrode module 105 to generate hydrogen so that regular water may be generated into hydrogen water. The controller 600 may control the pump 301 to pump the hydrogen water stored in the water tank 101 to the water discharger 400. In general, the controller 600 operates the hydrogen water generator 1000 and may be a microprocessor, an electrical circuit, an integrated circuit, an electrical logic circuit, etc.

The sensor 500 may detect a state of regular water A or hydrogen water W stored in the water tank 101. In this case, the state of the regular water A or hydrogen water W being detected may be, for example, capacity, supply, concentration, and withdrawal. These factors may be used for determining whether the hydrogen water generator 1000 may require regular water replenishment or the concentration of hydrogen in the hydrogen water needs to be increased.

For example, if the hydrogen water W capacity in the water tank 101 is less than a predetermined amount, it may be that replenishing with the regular water A may be required to generate new hydrogen water W. In addition, when the replenishing with the regular water A has reached a predetermined amount or more in the water tank 101, it may be that further replenishment may no longer be necessary.

In one embodiment, replenishing with the regular water A as described above may determine whether the water supply inlet 103 is opened or closed. That is, when there is a need to replenish with the regular water A, the water supply inlet 103 needs to be opened, otherwise the water supply inlet 103 may be closed.

The controller 600 may control whether the water supply inlet 103 is opened or closed by operating the cover plate 210 according to the state of the regular water A or the hydrogen water W detected by the sensor 500. That is, when the controller 600 determines through the sensor 500 that replenishing of the regular water A may be required, the opening or closing of the water supply inlet 103 may be automatically controlled.

For example, when the hydrogen water W in the water tank 101 is less than a predetermined amount, the water supply inlet 103 may be controlled to automatically open for replenishing with the regular water A. When the replenishing with the regular water A into the water tank 101 is completed, the water supply inlet 103 may be controlled to be closed automatically. Thus, the hydrogen water generator 1000 according to the embodiment detects the state of the regular water A or the hydrogen water W in the water tank 101 to control whether the water supply inlet 103 needs to be opened or closed. Accordingly, opening and closing of the water supply inlet 103 according to the situation may be automatically performed.

The sensor 500 may detect the amount of the hydrogen water W stored in the water tank 103. To this end, the sensor 500 may be a distance measuring sensor for measuring a distance of the hydrogen water W level surface. The sensor 500 may be a gravimetric sensor for measuring a weight of the hydrogen water W. The sensor 500 is not limited to those described above and may include various configurations capable of measuring the amount of the hydrogen water W.

Based on the detection by the sensor 500, the controller 600 may control the water supply inlet 103 to be opened when the detected amount of the hydrogen water W is less than or equal to a predetermined amount. That is, when the hydrogen water W in the water tank 101 is detected below a predetermined amount, the cover plate 210 may be moved to the left side to open the water supply inlet 103. This operation may be automatically performed by the controller 600 without a separate operation by the user. As such, the hydrogen water generator 1000 may automatically open the water supply inlet 103 when replenishing with the regular water A is required.

The hydrogen water generator 1000 may maintain a state in which the water supply inlet 103 is opened until the water tank 101 is replenished with regular water. Accordingly, the user may easily understand that the replenishing with the regular water A may be required by confirming the opening of the cover plate 210. Accordingly, the user may replenish the water tank 101 with the regular water A through the water supply inlet 103.

The sensor 500 may detect whether the regular water A has been supplied to the water supply inlet 103. To this end, the sensor 500 may detect the regular water A passing through the open surface of the water supply inlet 103. The sensor 500 may detect the regular water A in contact an the inner surface of the water supply inlet 103. The sensor 500 may be multiple sensors to detect whether the regular water A has been supplied.

Based on the detection of the sensor 500, the controller 600 may control to close the water supply inlet 103 when the replenishing of the regular water A is not detected for a predetermined amount of time. For example, if the replenishing of regular water A has not been made for a predetermined amount of time where the water supply inlet 103 is opened, it may be that the user has sufficiently provided the regular water A as intended. Therefore, by treating the replenishing of regular water A as completed, the cover plate 210 may be moved to the right side and the water supply inlet 103 may be closed. The operation may also be automatically performed by the controller 600 without a separate operation by the user.

Accordingly, the hydrogen water generator 1000 according to the embodiment may automatically close the water supply inlet 103 in a situation where it is determined that the replenishing with the regular water A has been completed.

The sensor 500 may detect the concentration of hydrogen in the hydrogen water W stored in the water tank 101. The sensor 500 may include a pH sensor for detecting the hydrogen concentration in the hydrogen water W. Alternatively, the sensor may include various components capable of detecting the hydrogen concentration in the hydrogen water W.

Based on the detection of the sensor 500, the controller 600 may restrict the discharge of the hydrogen water W when the detected hydrogen concentration in the hydrogen water W is less than a predetermined amount. That is, in order to fully receive the benefits of using the hydrogen water W, the hydrogen water W should have hydrogen of a predetermined concentration or more. Thus, when the hydrogen water W is below a predetermined concentration, the controller 600 may activate the electrode module 105 to generate hydrogen while the water supply inlet 103 is closed, and thereby increase the hydrogen concentration in the hydrogen water W.

There may be a case where the user may want to drink the hydrogen water W while the hydrogen water W does not have a predetermined concentration of hydrogen. That is, the user may input the water output signal to discharge the hydrogen water W from the hydrogen water generator 1000 without checking the state of the hydrogen water W, perhaps on the display. Since the hydrogen water W state may be inappropriate to be provided to the user, it may be necessary to restrict the discharge of hydrogen water W. Thus, the discharge of hydrogen water W may be restricted until the hydrogen concentration in the hydrogen water W has reached a predetermined amount. The user may be informed that the discharge of the hydrogen water W has been restricted through the output unit using visual and/or audio output. However, if the user still wants to receive the hydrogen water W, the user may input the water output signal again. For example, the display may display that the hydrogen water does not have the recommended concentration of hydrogen and whether the user still wants the hydrogen water. Alternatively, a separate operation button may be provided that allows the user to override the restriction of the discharge of the hydrogen water W.

FIGs. 8 and 9 are views showing in detail with respect to the sliding of the cover plate in the hydrogen water generator according to another embodiment of the present invention.

Referring to FIGs. 8 and 9, in the hydrogen water generator 1000 according to another embodiment of the present invention, the main body 100 includes an upper cradle 110, the opening/closing motor 120, and a pinion 130. The cover plate 210 may include a rack 211.

The upper cradle 110 may be a part installed at the upper end of the main body 100. The upper cradle 110 may support the opening/closing motor 120 and the pinion 130 with respect to the main body 100. That is, the opening/closing motor 120 and the pinion 130 involved in the sliding of the cover plate 210 may be installed in the upper cradle 110.

Based on the control of the controller 600, power supplied to the opening/closing motor 120 generates a rotational force around its rotating shaft and the rotational force may provide a driving force for sliding the cover plate 210. That is, the open/close motor 120 converts the electrical energy of the power supply into kinetic energy of the rotational force, which is used to drive the cover plate 210.

The central axis of the pinion 130 is coupled to the shaft of the opening/closing motor 120 and when the opening/closing motor 120 is rotated, the pinion 130 rotates with the opening/closing motor 120. The pinion 130 may be circular having a sawtooth structure formed on the outer peripheral surface of the pinion 130. The teeth of the pinion 130 may engage with the rack 211 to transmit the rotational force provided by the open/close motor 120 to the rack 211.

The rack 211 may be disposed to extend linearly along an inner surface of the cover plate 210 and may include an outer surface to engage the outer circumferential surface of the pinion 130. The rack 211 may be formed with a sawtooth structure on the outer surface. When the teeth of the rack 211 engages with the teeth of the pinion 130, the rotational motion of the pinion 130 may be transformed into a linear motion of the rack 211. Thus, the cover plate 210 in which the rack 211 is disposed, may move along the transverse direction parallel to the upper surface of the body 100 when the pinion 130 rotates. As shown in FIG. 8, in the state in which the cover plate 210 closes the open surface of the water supply inlet 103, the left side of the outer surface of the rack 211 is engaged with the pinion 130.

FIG. 9 shows the open/close motor 120 rotating the pinion 130 in a state in which the cover plate 210 opens the open surface of the water supply inlet 103. The rack 211 engaged with the pinion 130 has moved laterally in the left direction so that the right side of the outer surface of the rack 211 is engaged with the pinion 130. As such, in the present embodiment, the cover plate 210 has slid through the transmission of the driving force through the opening/closing motor 120, the pinion 130, and the rack 211. Accordingly, the open surface of the water supply inlet 103 may be opened and closed more accurately and stably.

The arrangement position and the configuration of the opening/closing motor 120, the pinion 130 and the rack 211 shown in the drawings are exemplary for convenience of description. Various configurations may be used and various changes may be made within the scope in which the above functions are implemented.

In one embodiment, the open/close motor 120 may be disposed symmetrically on both surfaces with respect to the rotation surface of the pinion 130 as a pair. That is, the pair of open/close motors 120 may be symmetrically coupled at both sides of the pinion 130 to provide an equal driving force to the pinion 130 and the rack 211. The cover plate 210 may receive an equal driving force from a pair of open/close motors 120. Accordingly, when the cover plate 210 slides, it may be possible to prevent wobbling of the cover plate 210.

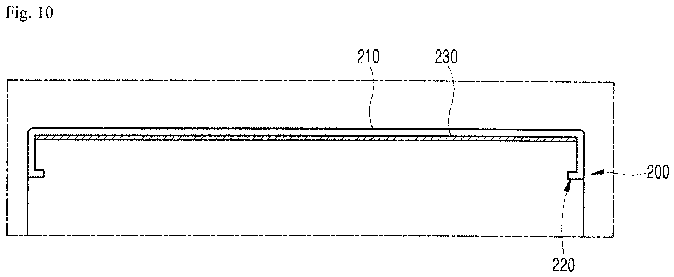

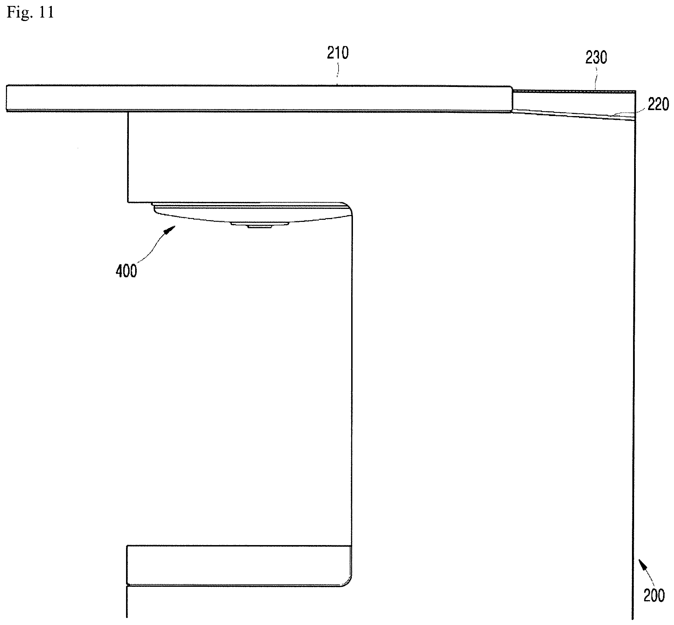

FIGs. 10 and 11 are views showing in detail a state in which the cover plate couples with the body of the hydrogen water generator according to an embodiment of the present invention.

Referring to FIGs. 10 and 11, in the hydrogen water generator 1000 according to the embodiment of the present invention, the body 200 has a rail groove 220 formed in the transverse direction (horizontal direction) which is parallel to an upper end thereof, and a cover plate 210 may have a portion thereof inserted into the rail groove 220. When sliding the cover plate 210 in the transverse direction, it may be necessary to limit the displacement of the cover plate 210 in the longitudinal direction, which is perpendicular to the cover plate, as much as possible. If displacement occurs in the longitudinal direction of the cover plate 210, a gap between the cover plate 210 and the upper surface of the main body 100 may occur. As a result, the sealing between the cover plate 210 and upper surface of the main body 100 may be difficult. Accordingly, a rail groove 220 corresponding to the sliding direction of the cover plate 210 may be formed at the upper portion of the body 200, and a portion of the cover plate 210 is supported in the rail groove 220.

As such, in the hydrogen water generator 1000 according to the present embodiment, the cover plate 210 is guided by and slides in the rail groove 220, and the longitudinal displacement of the cover plate 210 with respect to the upper surface of the main body 100 may be effectively limited.

Referring to FIG. 11, at least a portion of the rail groove 220 may be inclined so that the distance from the cover plate 210 increases as the cover plate 210 closes on the open surface of the water supply inlet 103. That is, the cover plate 210 sliding in a state in which a portion is inserted into the rail groove 220 may be formed to be inclined as shown in FIG 11. For example, referring to FIG. 8, as the cover plate 210 moves to the right to cover the open surface of the water supply inlet 103, the cover plate 210 is constrained by the rail groove 220 and receives a force drawn downward due to the inclination of the rail groove 220 around the location of the water supply inlet 103. The cover plate 210 receives the greatest downward force when the cover plate 210 closes the open surface of the water supply inlet 103. As a result, the cover plate 210 may be in tight contact with the upper surface of the main body 100.

As described above, in the hydrogen water generator 1000 according to the present embodiment, the rail groove 220 is formed to be inclined so that the cover plate 210 is pressed along the longitudinal direction when the cover plate 210 slides onto the open surface of the water outlet 103. Accordingly, the seal between the cover plate 210 and the upper surface of the main body 100 may be increased.

In one embodiment, a sealing member 230 may be interposed between at least a portion of the cover plate 210 and the main body 100 where the open surface of the water supply inlet 103 is located. This includes the sealing member 230 disposed around the contour of the cover plate 210 and/or the main body 100. The sealing member 230 is a member interposed on a joining surface of the cover plate 210 and the open surface of the water supply inlet 103 to minimize a gap between the two and block the leakage of hydrogen, for example. The sealing member 230 may be a gasket and the like. The portion where the cover plate 210 and the open surface of the water supply inlet 103 are in contact with each other is the portion most vulnerable to hydrogen escaping. When play occurs in that portion, a large amount of hydrogen may be discharged to the outside of the hydrogen water generator 1000. Therefore, providing a separate sealing member 230 in that portion may prevent or minimize the leakage of hydrogen from the hydrogen water generator 1000. Also, the seal at the time of closing the opening surface of the water supply inlet 103 by the cover plate 210 may be further improved.

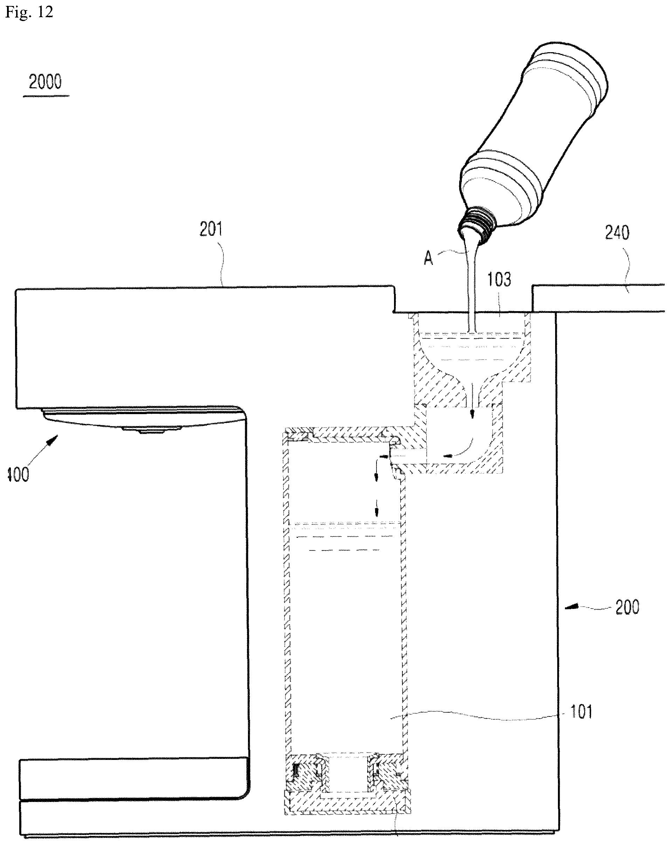

FIG. 12 is a side view showing an example of a state of using a hydrogen water generator according to a second embodiment of the present invention.

As shown in FIG. 12, the hydrogen water generator 2000 according to the second embodiment of the present invention includes a main body 100, a body 200, a transfer pipe 300, and a discharge unit 400. Here, the main body 100 includes a water tank 101 and a water supply port 103, and the body 200 includes an upper plate 201 and a cover plate 240. The main body 100, the body 200, the transfer pipe 300, the water discharger 400, and the water tank 101 have been described in detail above, and therefore, detailed description thereof is omitted.

The water supply inlet 103 may be coupled to the water tank 101 and may be a portion formed so that at least a portion of the upper surface is opened toward the upper surface of the main body 100. Accordingly, when the user pours regular water A into the opening of the water supply inlet 103, the regular water A is supplied into the water tank 101 coupled to the water supply inlet 103.

The upper plate 201 may be a portion covering the upper surface of the main body 100. The upper plate 201 may cover a portion of the upper surface of the main body 100 except for the water supply inlet 103. The cover plate 240 may be coupled to the top plate 201 to open and close the opening of the water supply inlet 103. The upper plate 201 and the cover plate 240 may form an upper surface of the main body 100 of the hydrogen water generator 2000. That is, the upper plate 201 and the cover plate 240 may be combined with each other to form the top surface of the hydrogen water generator 2000. The cover plate 240 opens and closes the open surface of the water supply inlet 103. That is, the user may supply the regular water A into the water supply inlet 103 after moving the cover plate 240 to expose the open surface of the water supply inlet 103. Alternatively, the controller 600 may move the cover plate 240 when the user presses the operation button 213 or automatically. In this way, the regular water A poured into the water supply inlet 103 may be supplied into the water tank 101 coupled to the water supply inlet 103.

Then, after the supply of the regular water A is completed, the user may move the cover plate 240 to its original position to close the water supply inlet 103 with the cover plate 240. Alternatively, the controller 600 may move the cover plate 240 when the user press the operation button 213 or automatically. Here, the cover plate 240 may slide along a transverse direction parallel to the open surface of the water supply inlet 103 and open and close the open surface of the water supply inlet 103. The water supply inlet 103 may be a shape in which at least a portion of the upper surface is open, and the open surface of the water supply inlet 103 may be formed on the transverse plane. Accordingly, the cover plate 240 may be configured to move along the transverse direction on the horizontal plane in which the open surface of the water supply inlet 103 is formed. The cover plate 240 may slide in the transverse direction in a state where the displacement in the longitudinal direction may be limited.

Accordingly, in the present embodiment, the direction of the discharge pressure applied from the inside toward the outside and the opening and closing direction of the cover plate 240 may cross each other to offset the discharge pressure. The cover plate 240 may be coupled on the water supply inlet 103 so as to slide along the transverse direction parallel to the open surface of the water supply inlet 103 and the displacement in the longitudinal direction may be limited. Through this, the discharge pressure applied from the water supply inlet 103 toward the cover plate 240 may be offset by the coupling force of the cover plate 240 with limited displacement in the longitudinal direction.

Therefore, the airtightness of the hydrogen water generator 2000 may be improved when the hydrogen water W is generated and stored in the water tank 101.

Other than the above-described configuration, the hydrogen water generator 2000 according to the second embodiment of the present invention may have the same or similar structure as the hydrogen water generator 1000 described above. Therefore, detailed descriptions as to the other parts will be omitted.

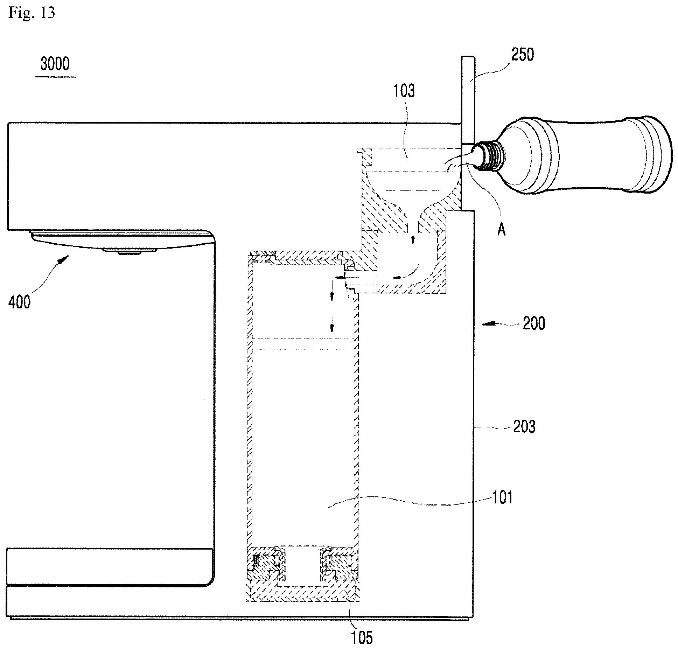

FIG. 13 is a side view showing an example of a state of using a hydrogen water generator according to a third embodiment of the present invention.

As shown in FIG. 13, in the hydrogen water generator 3000 according to the third embodiment of the present invention, the body 200 includes a side plate 203 and a cover plate 250.

The water supply inlet 103 may be coupled to the water tank 101 and at least a portion of the side is formed to open toward one side of the body 200. Accordingly, when the user pours regular water A into the opening of the water supply inlet 103 at the side, the regular water A is supplied into the water tank 101 coupled to the water supply inlet 103.

The side plate 203 is a portion covering one side of the main body 100. The side plate 203 may cover a portion excluding the water supply inlet 103 of one side of the main body 100. The cover plate 250 may be coupled to the side plate 203 to open and close the open surface of the water supply inlet 103. The side plate 203 and the cover plate 250 may form one side of the body 200 of the hydrogen water generator 3000. That is, the side plate 203 and the cover plate 250 are combined with each other to form an exterior of one side of the hydrogen water generator 3000. The cover plate 250 opens and closes the open surface of the water supply inlet 103 formed to be open toward one side of the body 200.

The cover plate 250 may slide along the longitudinal direction parallel to the side of the open surface of the water supply inlet 103 and open and close the side of the open surface of the water supply inlet 103. The water supply inlet 103 may be a shape in which at least a portion of the side is open, and the side of the open surface of the water supply inlet 103 may be formed on the longitudinal plane. Accordingly, the cover plate 250 may be configured to move along the longitudinal direction on the longitudinal plane on which the side of the open surface of the water supply inlet 103 may be disposed. That is, the cover plate 250 may slide in the longitudinal direction in a state where the displacement in the transverse direction may be limited.

Accordingly, in the hydrogen water receiver 3000 according to the present embodiment, the direction of the discharge pressure applied from the inside toward the outside and the opening and closing direction of the cover plate 250 may cross each other to offset the discharge pressure. The cover plate 250 may be coupled on the water supply inlet 103 so as to slide along the longitudinal direction parallel to the side of the open surface of the water supply inlet 103, and the displacement in the transverse direction may be limited. Through this, the discharge pressure applied from the water supply inlet 103 toward the cover plate 250 may be offset by the coupling force of the cover plate 250 with limited displacement in the transverse direction.

Therefore, the airtightness of the hydrogen water group 3000 may be improved when the hydrogen water W is generated and stored.

Other than the above-described configuration, the hydrogen water receiver 3000 according to the third embodiment of the present invention may be the same or similar structure to the hydrogen water generator 1000 described above. Thus, detailed descriptions as to the other parts will be omitted.

While preferred embodiments of the present invention have been described and illustrated above, the present invention is not limited to the described embodiments, and those skilled in the art can variously change to other specific embodiments without departing from the scope of the present invention. It will be understood that modifications and variations are possible. Therefore, the scope of the present invention should not be defined by the described embodiments, but should be determined by the technical scope described in the claims.

## Claims

1. A hydrogen water generator (1000) comprising:
a body (200);
a water tank (101) configured to receive and store water;
an electrode module (105) coupled to the water tank (101), and configured to generate hydrogen water in the water tank (101);
a water supply inlet (103) disposed at the body (200), the water supply inlet (103) including an open surface disposed at a surface of the body (200) so as to open to an outside environment; and
a cover plate (210) configured to open and close the open surface of the water supply inlet (103),
wherein the cover plate (210) is movable along a transverse direction parallel to the open surface of the water supply inlet (210) to open and close the open surface of the water supply inlet (210).

2. The hydrogen water generator (1000) of claim 1, wherein a portion of the body (200) in which the open surface of the water supply inlet (103) is disposed has a planar shape in which a length in one direction is longer than a length in another direction, and the cover plate (210) is configured to move in the direction having the longer length.

3. The hydrogen water generator (1000) of claim 1 or 2, wherein the body (200) includes a rail groove (220) and a portion of the cover plate (210) is movably inserted into the rail groove (220).

4. The hydrogen water generator (1000) of claim 3, wherein at least a portion of the rail groove (220) is inclined so that a distance between the rail groove (220) and the cover plate (210) increases as the cover plate (210) closes on the open surface of the water supply inlet (103).

5. The hydrogen water generator (1000) of any one of claims 1 to 4, further comprising:
a sealing member (230) being interposed between a joining surface of the cover plate (210) and the body (200) where the open surface of the water supply inlet (103) is located.

6. The hydrogen water generator (1000) of any one of claims 1 to 5, further comprising:
a controller (600); and
a motor (120) coupled to the cover plate (210),
wherein the controller (600) is configured to operate the motor (120) to move the cover plate (210) along the transverse direction to open and close the open surface of the water supply inlet (103).

7. The hydrogen water generator (1000) of claim 6, wherein
the body (200) includes a cradle part (110), and a pinion (130) and a rack (211) configured to couple the motor (120) to the cover plate (210), the pinion (130) is coupled to a shaft of the motor (120) and the rack (211) is coupled to the cover plate (210),
wherein the cradle part (110) is configured to support the motor (120) and the pinion (130), and
the rack (211) extends along the transverse direction and includes a surface that engages with the pinion (130).

8. The hydrogen water generator (1000) of claim 7, wherein the motor (120) comprises a pair of motors (120) arranged symmetrically on both sides of the pinion (130) along an axis in which the pinion (130) rotates.

9. The hydrogen water generator (1000) of any one of claims 1 to 8, further comprising:
a sensor (500) configured to sense a concentration of hydrogen in the hydrogen water stored in the water tank (101); and
a controller (600) configured to activate the electrode module (105) to generate hydrogen when the hydrogen concentration sensor (500) senses that the concentration of hydrogen in the hydrogen water is less than a predetermined amount.

10. The hydrogen water generator (1000) of claim 9, wherein the controller (600) is configured to restrict discharge of hydrogen water when the hydrogen concentration sensor (500) senses that the concentration of hydrogen in the hydrogen water is less than a predetermined amount.

11. The hydrogen water generator (1000) of claim 10, wherein the controller (600) is configured to release the restriction of the discharge of the hydrogen water when the controller (600) receives an override signal.

12. The hydrogen water generator (1000) of any one of claims 6 to 11, further comprising:
a sensor (500) configured to sense a water level in the water tank (101); and
the controller (600) configured to operate the motor (120) to move the cover plate (210) to open the open surface of the water supply inlet (103) when the water level sensor (500) senses that the water level in the water tank (101) is less than a predetermined amount.

13. The hydrogen water generator (1000) of claim 12, wherein
the controller (600) is configured to operate the motor (120) to move the cover plate (210) to close the open surface of the water supply inlet (103) when the water level sensor (500) senses that the water level in the water tank (101) is at or more than the predetermined amount.

14. The hydrogen water generator (1000) of claim 12, further comprising:
a sensor (500) configured to sense whether water is being supplied at the water supply inlet (103); and
the controller (600) configured to operate the motor (120) to move the cover plate (210) to close the open surface of the water supply inlet (103) when the water supply sensor (500) does not sense water being supplied at the water supply inlet (103) within a predetermined of time during when the cover plate (210) has opened the open surface of the water supply inlet (103).

15. The hydrogen water generator (1000) of any one of claims 1 to 14, wherein the cover plate (210) is configured to cover all of an upper surface of the body (200).
